# EUROPEAN PATENT APPLICATION

(11) **EP 4 019 168 A1**
(43) Date of publication of application: **29.06.2022**
(21) Application number: 21195727.9
(22) Date of filing: 09.09.2021
(51) Int. Cl.: B22F 9/08, B33Y 70/00, C22B 9/00, C22B 9/02, C22B 9/04, C22B 9/22

(54) **METHOD AND APPARATUS FOR MANUFACTURING POWDER FOR ADDITIVE MANUFACTURING**

(30) Priority: 23.12.2020 US 202017132335
(71) Applicant: Hamilton Sundstrand Corporation, Charlotte, NC 28217-4578 (US)
(72) Inventor: MIRONETS, Sergey, Charlotte 28202 (US); BORKOWSKI, Luke, West Hartford, 06177 (US); STAROSELSKY, Alexander, Avon, 06001 (US)
(74) Representative: Dehns

(57) **Abstract**

The present disclosure relates to a method of manufacturing a powder (102) for additive manufacturing. The method comprises steps of: vaporising a precursor metal material (112) to form a metal vapor (118), wherein the precursor material (112) includes a metal alloy and inclusions, and vaporising the alloy includes heating the precursor material (112) to a temperature above the boiling point of the metal alloy and below the boiling point of the inclusions; condensing the metal vapor to form a molten metal (126); and atomizing the molten metal (126) to form a metal powder (102). The present disclosure also relates to an apparatus (100) for carrying out the method.

## Description

### TECHNICAL FIELD

This disclosure relates to the technical field of additive manufacturing, and more particularly to the manufacture of high-purity precursor powder for use in additive manufacturing processes.

These processes are particularly relevant for the production of highly safety-critical parts, for example in a gas turbine engine or rocket engine, such as fuel nozzles or high pressure turbine blades.

### BACKGROUND

Inert gas atomization (IGA) has previously been used for manufacturing precursor powder that is to be used for additive manufacturing of parts, as well as for other metal powder processing and powder shaping techniques.

IGA includes melting a feedstock alloy or metal, passing the molten metal through a nozzle and impinging the stream of molten metal as it leaves the nozzle with one or more jets of inert gas. The jets of inert gas may be cool relative to the molten metal. The jets of inert gas cause the molten metal to split into droplets and solidify to produce a powder, which can be collected.

The use of IGA alone in producing powders typically results in powders that contain inclusions, such as oxides or nitrides, which were present in the feedstock alloy or metal. The presence of inclusions in the precursor powder can lead to defects in a part manufactured therefrom. The defects reduce the durability of the manufactured part. These defects may include prior particle boundaries that inhibit the resistance of the part to fatigue or creep loading conditions.

Microstructural observations have revealed that prior particle boundaries contribute to lower ductility at elevated temperatures and increased notch sensitivity. Notch sensitivity is a measure of the reduction in strength of a metal caused by the presence of stress concentration.

Other defects in the manufactured (or fused) part arising from the use of precursor powders with significant inclusions include pores, cracks, inclusions (either remnant inclusion from the original inclusions, or inclusions resulting from further chemical reactions), residual stresses, and surface roughness. Each of these may have detrimental effects on the quality and/or durability of the manufactured part.

Another previously known method for manufacturing precursor powder is called Plasma Rotating Electrode Process (PREP). PREP involves rotating a rod of feedstock alloy or metal within a chamber. The rod is an electrode such that a plasma arc may be induced and used to melt the end of the rod. As the rod rotates with molten metal at its end, centrifugal forces cause droplets of the metal to detach from the rod. The droplets will solidify within the chamber thereby producing a powder for collection. The chamber is typically filled with inert gas to reduce the impurities present in the final powder.

Although PREP may produce a higher quality powder than IGA, PREP does not remove the inclusions that are present in the feedstock alloy or metal. Thus, the same issues described above with respect to the parts produced with powder formed by IGA are therefore also present in parts produced with powder formed by PREP. Furthermore, PREP may be a relatively expensive process.

There is therefore a need to improve the process for producing additive manufacturing precursor powders, which results in a powder with fewer inclusions than these known methods.

### SUMMARY OF INVENTION

From one aspect, the present disclosure relates to a method of manufacturing a powder for additive manufacturing. The method comprises the step of vaporising a precursor metal material to form a metal vapor. The precursor material includes a metal alloy and inclusions, and the step of vaporising the alloy includes heating the precursor material to a temperature above the boiling point of the metal alloy and below the boiling point of the inclusions. The method further comprises the steps of condensing the metal vapor to form a molten metal, and atomizing the molten metal to form a metal powder.

In an embodiment of the above, the atomizing step uses inert gas.

In a further embodiment of either of the above, the vaporization and condensing steps are conducted in separate chambers. Alternatively, the vaporization and condensing steps are conducted in the same chamber.

In a further embodiment of any of the above, between the vaporising and condensing steps, the method further comprises the step of directing the metal vapor toward a condenser by a pressure differential. Additionally or alternatively, between the vaporising and condensing steps, the method further comprises the step of directing the metal vapor toward a condenser by a magnetic field.

In a further embodiment of any of the above, the vaporising step includes heating the precursor material by directing an electron beam onto the precursor material. Additionally or alternatively, the vaporising step includes heating the precursor material by heating a crucible holding the precursor material and/or heating the precursor material by directing a laser onto the precursor material. The electron beam may be directed onto the precursor material using any suitable device, such as an electron gun.

In a further embodiment of any of the above, the precursor material is at least one of a Nickel-based, Titanium-based, or Cobalt-based superalloy. Specific examples may include, but are not limited to, Inconel 718 and Haynes 282.

In a further embodiment of any of the above, the method further comprises maintaining a controlled or inert atmosphere during the vaporising, condensing and/or atomization steps. For example, by generating a vacuum or providing an inert gas.

From another aspect, the present disclosure relates to an apparatus for manufacturing a powder for additive manufacturing. The apparatus comprises: a vaporization chamber; a crucible disposed within the vaporization chamber for holding a precursor metal material; a heat source for vaporising the precursor metal material to form a metal vapor; a condenser in fluid connection with the vaporization chamber for condensing the metal vapor to a molten metal; a feed chamber in fluid connection with the condenser for receiving the molten metal; an atomizer for atomizing the molten metal into a powder, wherein the atomizer comprises a nozzle for forming a powder from the molten metal, wherein the feed chamber is configured to hold the molten metal and feed the molten metal to the nozzle; and a collection chamber downstream of the nozzle for collecting the powder.

In one embodiment of the above aspect, the atomizer further comprises at least one inert gas conduit fluidly connected to a source of inert gas and configured to direct inert gas across an outlet of the nozzle for forming the powder from the molten metal.

In a further embodiment of either of the above, the vaporization chamber is separate from the condenser and the feed chamber. In a further embodiment, the apparatus further comprises a conduit fluidly connecting the vaporization chamber and the feed chamber. The condenser comprises one or more walls of the conduit and the feed chamber. In an alternative embodiment, the vaporization chamber is also the feed chamber, and the condenser comprises one or more walls of the vaporization chamber.

In a further embodiment of any of the above, the heat source includes an electron beam directed at the precursor material. Additionally or alternatively, the heat source includes a laser directed at the precursor material and/or heats the crucible. The electron beam may be directed onto the precursor material using any suitable device, such as an electron gun. In further embodiments, there may also be a plurality of the heat sources combined together, for example, a first heat source that heats the precursor material (e.g., the electron beam and/or laser), and a second heat source that heats the crucible.

In a further embodiment of any of the above, the apparatus further comprises one or more magnets arranged to direct the metal vapor toward the condenser. The one or more magnets can be any suitable type, such as permanent magnets or electromagnets.

In a further embodiment of any of the above, the apparatus is configured to operate under a controlled or inert atmosphere (e.g., the chambers and/or conduit thereof are kept under such conditions), for example, by maintaining a vacuum, or containing an inert gas therein. This may be achieved by providing vacuum pumps/fluid pumps in fluid communication with the apparatus.

### BRIEF DESCRIPTION

Figure 1 shows a schematic overview of an apparatus used for manufacturing a powder in accordance with an embodiment of the present disclosure.
Figure 2 shows a schematic overview of another apparatus used for manufacturing a powder in accordance with another embodiment of the present disclosure.
Figure 3 shows a flowchart of a method for manufacturing a powder in accordance with the present disclosure.

### DETAILED DESCRIPTION

The following details of embodiments of the invention are described by way of example. Exemplary features of the arrangements described herein, except where explicitly stated, may be combined in any suitable arrangement.

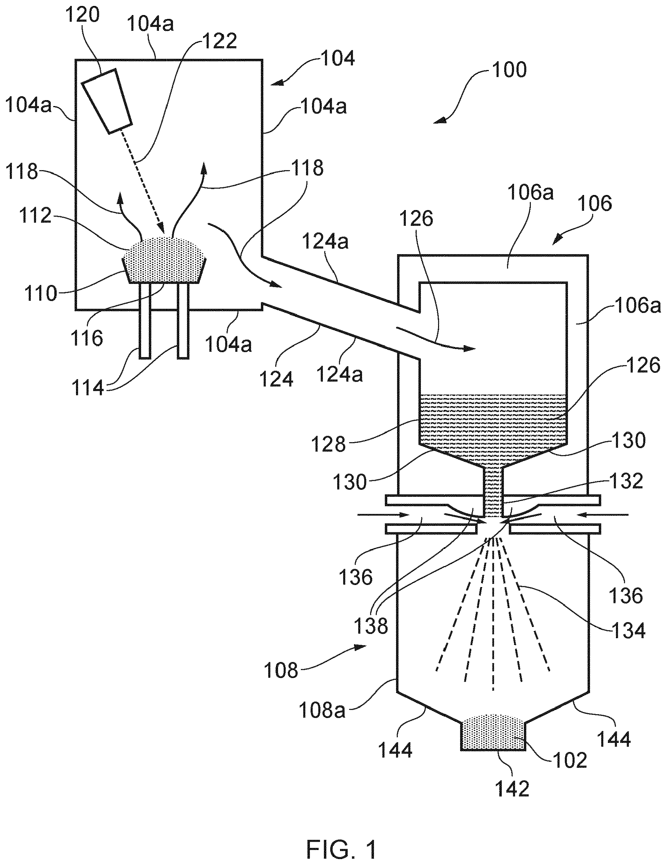

Referring to Figure 1, a system 100 (or apparatus) for manufacturing a powder 102 in accordance with an embodiment of the present disclosure is shown.

The system 100 includes a vaporization chamber 104, a feed chamber 106 and a collection chamber 108.

As discussed below, the vaporization chamber 104 is so-called because it is a chamber within which vaporization of a precursor metal material 112 (i.e., a feedstock material from which a powder for additive manufacturing is to be produced) occurs. The feed chamber 106 is so-called because it is a chamber to which metal vapor condensate (i.e., metal vaporized from the precursor metal material 112 and condensed in the condenser 124) is fed and received. The collection chamber 108 is so-called because it is a chamber within which the powder 102 produced by the apparatus and methods of the present disclosed is collected.

The system 100 also includes a crucible 110 disposed within the vaporization chamber 104. The crucible 110 illustrated is located toward the base of the vaporization chamber 104. In other arrangements, the crucible 110 may be located elsewhere in the vaporization chamber 104, for example, at one side of the chamber 104 and/or elevated relative to the base of the chamber 104.

The crucible 110 holds the precursor metal material 112 that is to be vaporized. The illustrated precursor metal material 112 is in powder form. In other arrangements the precursor metal material 112 could be a solid billet or block of material, or be pellets, or be any other suitable material form of feedstock/precursor metal material 112 for vaporization.

The precursor metal material 112 can be any suitable metal or metal alloy feedstock material for which a powder thereof is desired. However, in embodiments, the precursor material 112 is a superalloy material, such as a Nickel-based, Titanium-based, or Cobalt-based superalloy. Although any such superalloys are applicable, some specific examples include Inconel 718 and Haynes 282.

The crucible 110 may be any suitable container or shape for holding the precursor material 112, for example, a dish or bowl-shape. The crucible 110 may also be made of any suitable material for withstanding the temperatures needed for vaporization of the precursor metal materials 112. For example, any suitable ceramic or metal material (e.g., with a melting point that is suitably higher than the boiling point of the precursor material 112).

The illustrated crucible 110 has connectors 114. The connectors 114 can be used to connect an external heat source (not shown) to the crucible 110. Alternatively, the connectors 114 can be electrical connectors 114 that provide power for a heat source 116 integrated with the crucible 110. The heat source can be provided by any suitable means, such as an electrically controlled heating device or element, such as a resistive or induction heating coil.

The external and integral heat sources are examples of one or more heating devices that may be used to vaporise the precursor metal material 112 to form a metal vapor 118. The external and integral heat sources may be known as 'crucible heating devices', as they rely on primarily heating the crucible 110 directly to transfer heat to the precursor material 112 for vaporization. The connectors 114 can also provide electrical connection in order to connect the precursor metal 112 material to a positive voltage for vaporization by an electron beam gun 120 as described below.

An electron beam gun 120 is illustrated that can be used as a heating device for vaporising the precursor metal material 112 to form a metal vapor 118. The electron beam gun 120 emits a beam of electrons 122 that is directed by the electron beam gun 120 to strike the precursor metal material 112 held in the crucible 110. Upon striking the precursor metal material 112 the energy (for example kinetic) of the electrons is transferred to the precursor metal material 112, which thereby heats up and is vaporized (it will either melt and then boil, or sublimate depending on the amount of energy transferred thereto).

The illustrated electron beam gun 120 is located within the vaporization chamber 104. In other arrangements, the electron beam gun 120 could be located outside of the vaporization chamber 104, but configured to direct a beam of electrons 122 into the vaporization chamber 104 to strike the precursor metal material 112, for example, through a window or opening in the vaporization chamber 104.

Alternatively or additionally, a laser source may be used and configured to direct a laser onto the precursor metal material 112 to vaporise the precursor metal material 112 to form the metal vapor 118.

Multiple electron beam guns 120 or laser sources or a combination thereof may be used in certain arrangements.

In contrast to the 'crucible heating devices' discussed above, the electron beam gun 120 and laser source may be known herein as 'precursor material heating devices', as they primarily heat the precursor material directly by applying radiation thereto.

It is to be understood that within the scope of the disclosure, any one or combination of the heating devices discussed above may be used (e.g., electron beam gun 120, laser beam or external or integrated crucible heat sources). Indeed, the combination of different heating devices can be used to provide a more efficient and controllable vaporization process.

In further examples, any other suitable heating device that is apparent to the skilled person and suitable to help vaporise the precursor material 112 may be used instead or in combination with heating devices discuss above. For example, the vaporization chamber 104 itself may be heated, for example by electrically resistive heaters heating one or more walls 104a of the vaporization chamber 104.

The system 100 also includes a condenser 124. The condenser 124 is in fluid communication with the vaporization chamber 104 and with the feed chamber 106.

The illustrated condenser 124 includes one or more walls 124a of a condensing conduit 124 that connects the vaporization chamber 104 to the feed chamber 106. The inner sides of walls 124a of the conduit 124 are exposed to the metal vapor 118 and the outer sides of the walls 124a are exposed to an external coolant surrounding the conduit 124, for example, ambient air. The conduit 124 enables heat exchange from the metal vapor 118, on the inner sides of the walls 124a, to the external coolant so as to condense the metal vapor 118 thereby producing a molten (i.e., liquid) metal 126. It will be appreciated that in order to condense the metal vapor 118 to a liquid, it is necessary for the vapor 118 to be cooled below its boiling point via heat transfer with the wall 124a of the conduit 124.

In some embodiments, as illustrated, the coolant is ambient air. However, other coolant arrangements may be used, such as water, oil or refrigerant pumped around the conduit 124 and in heat exchange relationship with the conduit (e.g., via a network of pipes or other suitable arrangement). The conduit 124 could also include heat-transfer features, such as fins, extending therefrom (e.g., from walls 124a) to improve the heat transfer with the ambient environment.

As shown in Figure 1, the conduit 124 may slope between the vaporisation chamber 104 and the feed chamber 106, such that any condensed molten metal 126 therein may flow to the feed chamber 106 under gravity. Alternatively, conduit 124 may be orientated or arranged differently and pumps or another suitable driving force for delivering condensed molten metal 126 to the feed chamber 106 may be used.

Alternatively, or in addition, the condenser may also include the feed chamber 106, on which metal vapor 118 can also condense against one or more walls 106a thereof. As will be appreciated, in such embodiments, the walls 106a of the feed chamber 106 can be surrounded by the external coolant, and maintained at a temperature generally below the boiling point of the metal vapor 118.

The feed chamber 106 includes a reservoir 128 for containing the molten metal 126 from the condensed metal vapor 118. The illustrated reservoir 128 includes tapered bottom walls 130 to help direct the molten metal 126 toward a nozzle 132. In this manner, the feed chamber 106 can be said to form a general funnel shape that directs molten metal 126 toward the nozzle 132 under the action of gravity.

The illustrated nozzle 132 is located centrally with respect to the bottom of the feed chamber 106. However, the nozzle 132 could be located anywhere along the bottom of the feed chamber 106. Moreover, the nozzle 132 could be located elsewhere and/or separate from the chamber 106, and the molten metal 126 can be delivered thereto in any other suitable manner. For example, the molten metal 126 could be pumped from the condenser/feed chamber to a separate nozzle downstream thereof.

The nozzle 132 is sized and shaped to allow a stream of molten metal 126 to exit therefrom. As discussed below, the stream of molten metal 126 is broken up to form separate droplets 134 upon leaving the nozzle 132 that then solidify to form the powder 102. This process is commonly known as 'atomization'.

The illustrated system 100 includes two inert gas conduits 136 arranged to direct streams of inert gas toward the stream of molten metal 126 exiting the nozzle 132 (e.g., across the exit of the nozzle 132). In other arrangements fewer or more than two inert gas conduits 136 may be used.

The illustrated inert gas conduits 136 include a constriction 138 at an end of each inert gas conduit 136 adjacent the nozzle 132. The constrictions 138 act to accelerate the stream of inert gas exiting the inert gas conduits 136.

The inert gas acts to break up the stream of molten metal 126 from the nozzle 132 into the separate droplets 134 and solidify them into the powder 102. Accordingly, the nozzle 132 and inert gas conduits 136 may herein be known collectively to provide an 'atomizer' or atomization assembly'. The inert gas streams are typically cold relative to the molten metal 126 to improve the quenching/solidification rate of the droplets 134. It should also be appreciated that the inert nature of the gas may help improve the purity of the powder produced.

Although the depicted example utilises an inert gas atomization process/atomizer to atomize the stream of molten metal 126 from nozzle 132, in other examples, the conduits 136 may use any other suitable fluid (e.g., non-inert gas, oil or water). Moreover, in yet further examples, any other suitable atomization process may be used in place of the inert gas/fluid atomization, such as centrifugal atomization, vacuum atomization, ultrasonic atomization or plasma atomization. Such processes and the structures required to provide the same are readily apparent to the skilled person, and so need not be discussed in further detail here.

The system 100 also includes a collection chamber 108 defined by a chamber wall 108a, which collects the powder 102 produced from the stream of molten metal 126 exiting the nozzle 132.

The illustrated collection chamber 108 is connected to the feed chamber 106. The collection chamber 108 is positioned below the feed chamber 106 in order to collect the powder 102 e.g., under the action of gravity.

The collection chamber 108 illustrated has a recess 142 for collecting the powder 102 located centrally at the bottom of the collection chamber 108 between tapered bottom walls 144 (i.e., forming a funnel-shaped portion of the chamber 108). In alternative arrangements, the collection chamber 108 could be arranged with other means for collecting the powder 102, for example a conduit directed to a hopper.

The system 100 (or certain parts thereof - e.g., chambers 104, 106, 108 and conduit 124) is configured to operate under controlled atmospheric or inert conditions, either by maintaining a vacuum, or containing an inert gas therein. The system 100 may thus include one or more pumps, inlets and outlets as appropriate to evacuate one or more of the chambers 104, 106, 108 and conduit 124 or to purge them of atmospheric gases and fill them with inert gas (such as argon or nitrogen) before carrying out vaporization, condensation and/or atomization processes therein.

Such vacuum or inert conditions can be necessary to prevent unwanted reactions occurring with the precursor material 112, metal vapor 118 and/or molten metal 126 during the processes. Such reactions may result in unwanted impurities or contaminants (e.g., oxides etc.) being included in the powder 102. As will be appreciated, the particular conditions necessary will depend on the reactivity of the precursor materials 112 to be used and the metal vapor 118 and molten metal 126 generated therefrom.

As will be appreciated, such vacuum or (low pressure) inert conditions can also be used to reduce the boiling point/vaporization temperatures needed for the precursor material 112 to form metal vapor 118 to appropriate levels for a particular application or system.

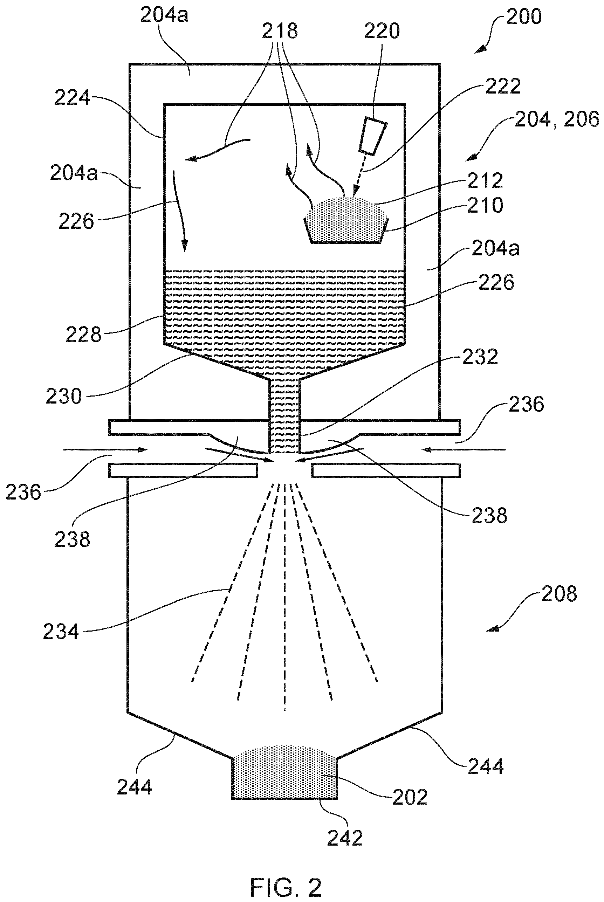

Referring to Figure 2, a system 200 (or apparatus) for manufacturing a powder 202 in accordance with another embodiment of the present disclosure is shown.

The system 200 shares many similar features with system 100. Accordingly, similar features in Figure 2 compared to those Figure 1 are given corresponding reference numerals but in the format 2xx rather than 1xx as in Figure 1 (i.e., element 102 from system 100 corresponds to element 202 from system 200 etc.). The description of such similar features in Figure 1 applies equally to those corresponding features in Figure 2, and so will not be repeated below, unless where necessary or to highlight certain differences there between.

The main difference between the embodiments of Figures 1 and 2 is that, instead of the vaporization chamber 104 and the feed chamber 106 being separate as in system 100, the system 200 includes a feed chamber 206 that is the same chamber as the vaporization chamber 204. Accordingly, in system 200, the condenser 224 comprises one or more walls 204a of the vaporization chamber 204 and conduit 124 is omitted.

The inner sides of one or more of the walls 204a of the vaporization chamber 204 are exposed to the metal vapor 218 when it is vaporized by the precursor material 212 in the crucible 210. The outer sides of the walls 204a of the vaporization chamber 204 are exposed to an external coolant, for example, ambient air. The condenser 224 enables heat exchange from the metal vapor 218, on the inner sides of the walls 204a of the vaporization chamber 204, to the external coolant so as to condense the metal vapor 218 thereby producing a molten metal 226. Again, as with walls 124a, it will be appreciated that the external coolant and heat transfer through walls 204a is such that it allows the metal vapor 218 to be cooled below the boiling point of the metal vapor 218 to transform it into the molten (i.e., liquid) metal 226.

The crucible 210 is illustrated without connectors. However, it will be appreciated that connectors similar to connectors 114 may be used to provide heat or electrical connection to one or more heating devices in a similar manner as described above for connectors 114.

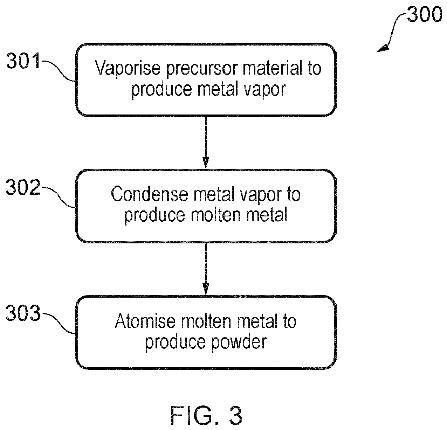

Referring to Figure 3, a method 300 for manufacturing a powder 102, 202 is illustrated.

The method 300 includes a vaporization step 301, condensing step 302 and an atomization step 303.

The vaporization step 301 includes heating the precursor metal material 112, 212 to a temperature above the boiling point of the metal or metal alloy constituent of the precursor material 112, 212, but below the boiling point of inclusions in the precursor metal material 112, 212. By heating the precursor metal material 112, 212 to this temperature, only the metal or metal alloy from the precursor metal material 112, 212 will be formed into a vapor 118, 218, and the inclusions will remain in solid or molten form in the crucible 110, 210. Accordingly, the eventual powder 102, 202 produced will have higher purity than the precursor metal material 112, 212 and higher purity than powder produced by previously known methods.

The heating may be realised using of one or more of the aforementioned electron beam gun 120, 220; laser source; or heat source connected to the crucible 110, 210, either integrally, such as heat source 116, or via connectors 114; or any other suitable heating means.

The condensing step 302 includes cooling the metal vapor 118, 218 to condense into a molten metal 126, 226 (i.e., by reducing its temperature to below its boiling point). The condensation can be achieved by the metal vapor 118, 218 contacting the inner surfaces of one or more walls 106a, 204a, 124a of one or both of the feed chamber 106, 206 and condensing conduit 124. The walls 106a, 204a, 124a are cooler than the boiling point (i.e., condensation temperature) of the metal vapor 118, 218. The walls 106a, 204a, 124a may be at that temperature simply by the system 100, 200 being present in ambient external conditions or, alternatively, the walls 106a, 204a, 124a may be actively cooled to the appropriate temperature using heat exchanger systems or active cooling systems (e.g., oil, water or refrigerant circuits and/or featuring heat transfer features as discussed above).

Before the condensing step, when the method 300 is performed using the first system 100, the metal vapor 118 may be directed toward the condenser 124 by a pressure differential. More specifically, a vapor pressure differential is maintained between the vaporization chamber 104 and the conduit 124/feed chamber 106 to drive metal vapor 118 towards the conduit 124/feed chamber 106 to be condensed. This pressure differential may be maintained by the conduit 124/feed chamber 106 being maintained under controlled atmospheric conditions, such as vacuum conditions. The metal vapour 118 may also be driven towards the condenser 124 by a temperature differential that is established between the relatively hot temperatures of the vapour 118 and the vaporization chamber 104 and the relatively cool temperatures inside the condenser 124/feed chamber 106.

One or more other biasing/driving forces to help deliver the metal vapor 118 between the vaporization chamber 104 and the conduit 124/feed chamber 106 may also be used, such as a magnetic field. For example, if the metal vapor 118 is magnetic, a magnet (e.g., a permanent magnet or an electromagnet) in the vicinity of the conduit 124 and/or feed chamber 106 can be used to help direct the vapor in their direction by magnetic attraction.

The atomization step 303 includes directing the molten metal 126, 226 through a nozzle 132, 232 in a stream that can be broken up into droplets 134, 234 that can be solidified after their exit from the nozzle 132, 232.

Inert gas is directed across the stream of molten metal 126, 226 at the exit of the nozzle 132, 232 by inert gas conduits 136, 236. The impingement of the inert gas on the stream of molten metal 126, 226 improves the atomization process by assisting in breaking up the stream of molten metal 126, 226 into the droplets 134, 234 and increasing the cooling rate (quench rate) of the droplets 134, 234 to create a powder 102, 202 with a smaller-grained microstructure. In addition, the inert nature of the gas also prevents the introduction of new impurities or inclusions into the powder 102, 202 during the atomization process.

Although this method 300 is exemplified, as discussed above, different types of atomizer/atomization processes can be used instead of nozzle 132, 232 in combination with inert gas conduits 136, 236 within the scope of this disclosure.

It is to be appreciated that the exemplified configuration of the systems 100, 200 and method 300 allow for a production of a powder 102, 202 for additive manufacturing that may be purer/more defect-free than that derivable from prior art systems and processes. The systems 100, 200 allows for combined vaporization and atomization steps in a single apparatus, which may reduce the number of separate handling and process steps required. The configuration of the apparatus (e.g., chambers stacked on top of each other and being gravity fed) may also provide a more compact or simple apparatus for achieving the powder.

It is to be appreciated that the powders 102, 202 produced by the exemplified systems 100, 200 and methods 300 may be particularly suitable for use in high cost, safety critical parts manufactured by additive manufacturing. Such safety critical parts are often utilised at high operating temperatures, and may be used in aerospace applications.

It will be appreciated that the embodiments described above are merely exemplary, and the skilled person will recognise that various modifications may be made thereto without departing from the scope of the disclosure.

## Claims

1. A method of manufacturing a powder (102; 202) for additive manufacturing, the method comprising:
vaporising a precursor metal material (112; 212) to form a metal vapor (118; 218), wherein the precursor material (112; 212) includes a metal alloy and inclusions, and vaporising the alloy includes heating the precursor material (112; 212) to a temperature above the boiling point of the metal alloy and below the boiling point of the inclusions;
condensing the metal vapor (118; 218) to form a molten metal (126; 226); and
atomizing the molten metal (126; 226) to form a metal powder (102; 202).

2. The method of claim 1, wherein the atomizing step uses an inert gas.

3. The method of claim 1 or 2, wherein the vaporising and condensing steps are conducted in separate chambers (104, 106).

4. The method of claim 1 or 2, wherein the vaporising and condensing steps are conducted in the same chamber (204, 206).

5. The method of any preceding claim, wherein, between the vaporising and condensing steps, the method further comprises the step of directing the metal vapor (118; 218) toward a condenser (124; 224) by a pressure differential.

6. The method of any preceding claim, wherein, between the vaporising and condensing steps, the method further comprises the step of directing the metal vapor (118; 218) toward a/the condenser (124; 224) by a magnetic field.

7. The method of any preceding claim, wherein the vaporising step includes heating the precursor material (112; 212) by directing an electron beam (122; 222) onto the precursor material (112; 212).

8. The method of any preceding claim, wherein the vaporising step includes heating the precursor material (112; 212) by heating a crucible (110; 210) holding the precursor material (112; 212).

9. The method of any preceding claim, wherein the vaporising step includes heating the precursor material (112; 212) by directing a laser onto the precursor material (112; 212).

10. The method of any preceding claim, wherein the precursor material (112; 212) is at least one of a Nickel-based, Titanium-based, or Cobalt-based superalloy.

11. An apparatus (100; 200) for manufacturing a powder (102; 202) for additive manufacturing, the apparatus (100; 200) comprising:
a vaporization chamber (104; 204);
a crucible (110; 210) disposed within the vaporization chamber (104; 204) for holding a precursor metal material (112; 212);
a heat source (116; 122; 222) for vaporising the precursor metal material (112; 212) to form a metal vapor (118; 218);
a condenser (124; 224) in fluid connection with the vaporization chamber (104; 204) for condensing the metal vapor (118; 218) to a molten metal (126; 226);
a feed chamber (106; 206) in fluid connection with the condenser (104; 204) for receiving the molten metal (126; 226);
an atomizer for atomizing the molten metal (126; 226) into a powder (102; 202), wherein the atomizer comprises a nozzle (132; 232) for forming the powder (102; 202) from the molten metal (126; 226), wherein the feed chamber (106; 206) is configured to hold the molten metal (126; 226) and feed the molten metal (126; 226) to the nozzle (132; 232); and
a collection chamber (108; 208) downstream of the nozzle (132; 232) for collecting the powder (102; 202).

12. The apparatus (100; 200) of claim 11, wherein:
the atomizer further comprises at least one inert gas conduit (136; 236) fluidly connected to a source of inert gas and configured to direct inert gas across an outlet of the nozzle (132; 232) for forming the powder (102; 202) from the molten metal (126; 226);
and/or the apparatus (100; 200) further comprises one or more magnets arranged to direct the metal vapor (118; 218) toward the condenser (124; 224).

13. The apparatus (100; 200) of claim 11 or 12, wherein either:
the vaporization chamber (104) is separate from the condenser (124) and the feed chamber (106), wherein the apparatus (100) optionally further comprises a conduit (124) fluidly connecting the vaporization chamber (104) and the feed chamber (106), and the condenser (124) comprises one or more walls (124a; 106a) of the conduit (124) and the feed chamber (106); or
the vaporization chamber (204) is also the feed chamber (206), and the condenser (224) comprises one or more walls (204a) of the vaporization chamber (204).

14. The apparatus (100; 200) of any of claims 11 to 13, wherein the heat source (116; 122; 222) includes at least one of an electron beam (122; 222) directed at the precursor material (112; 212) and a laser directed at the precursor material (112; 212), and/or the heat source (116) heats the crucible (110; 210).

15. The apparatus (100; 200) of any of claims 11 to 14, wherein the apparatus (100; 200) comprises a plurality of heat sources (116, 122; 222) including a first heat source (122; 222) that heats the precursor material (112; 212), and a second heat source (116) that heats the crucible (110; 210).
